# FASCICULE DE BREVET EUROPEEN

(11) **EP 0 597 740 B1**
(45) Date de publication et mention de la délivrance du brevet: **29.07.1998**
(21) Numéro de dépôt: 93402499.3
(22) Date de dépôt: 11.10.1993
(51) Int. Cl.: F21Q 1/00

(54) **Dispositif d'éclairage ou de signalisation à décharge luminescente pour véhicule automobile**
Lumineszierende Entladungsbeleuchtungs- oder Signaleinrichtung für ein Kraftfahrzeug
Luminescent discharge lighting or signalling device for a motor vehicle

(30) Priorité: 12.10.1992 FR 9212136
(43) Date de publication de la demande: 18.05.1994
(73) Titulaire: VALEO VISION, 93000 Bobigny (FR)
(72) Inventeur: Brassier, Marc, F-94300 Vincennes (FR); Gasquet, Jean-Claude, F-89100 Saint-Clément (FR); Segaud, Daniel, F-75012 Paris (FR); Mauroy, Bernard, F-77680 Roissy en Brie (FR)
(74) Mandataire: Martin, Jean-Jacques

(56) Documents cités:
- BE-A- 523 701
- DE-A- 3 433 151
- FR-A- 2 046 558
- GB-A- 2 217 515

## Description

La présente invention a trait d'une façon générale aux dispositifs d'éclairage ou de signalisation de véhicules automobiles.

Elle concerne plus particulièrement une nouvelle conception d'un dispositif tel qu'un bloc de feux de signalisation à plusieurs fonctions.

Traditionnellement, un dispositif d'éclairage (notamment éclairage intérieur) ou de signalisation comprend un socle opaque comportant en des emplacements appropriés des aménagements (porte-lampe) pour le montage et la connexion électrique d'une ou plusieurs lampes à filament, ainsi qu'un voyant, glace ou globe placé à l'avant du socle (par rapport à la direction d'émission de la lumière). Le socle et le voyant peuvent comporter de façon classique des aménagements (aménagements réfléchissants sur le socle, billes, prismes ou stries sur le voyant) pour que le ou les faisceaux (notamment faisceaux de signalisation) engendrés présentent chacun la photométrie souhaitée.

Une telle conception classique présente cependant, en particulier dans le cas des feux de signalisation, un certain nombre d'inconvénients, à la fois sur le plan optique et sur le plan esthétique. Tout d'abord, sur le plan optique, il est assez difficile, notamment pour des fonctions de signalisation à plage éclairante de grandes dimensions, d'obtenir une intensité d'éclairement homogène dans toute l'étendue de ladite plage. En particulier, les zones de la plage éclairante les plus éloignées du filament reçoivent en général une quantité de lumière par unité de surface qui est inférieure à ce que reçoit sa zone située immédiatement au droit de la lampe, et l'intensité de la plage éclairante décroît de son centre vers ses bords.

En outre, sur le plan de l'esthétique, le voyant présente une ou plusieurs couleurs (rouge, ambre, ...) qui sont imposées par la couleur que doit avoir le faisceau. En outre, du fait que chaque fonction de signalisation peut nécessiter sur le voyant des aménagements optiques particuliers pour conformer le faisceau, le voyant dans son ensemble présente le plus souvent un aspect très peu homogène sur son étendue lorsque toutes les fonctions de signalisation sont éteintes.

Par ailleurs, les dispositifs d'éclairage ou de signalisation classiques offrent un rendement lumineux médiocre. En outre, la chaleur engendrée par les lampes à filament pose des difficultés de conception, notamment quant au choix et au dimensionnement des matériaux situés dans leur voisinage.

Enfin les dispositifs d'éclairage ou de signalisation classiques sont encombrants, notamment du fait qu'il est nécessaire de laisser autour de la lampe un espace libre de taille importante en particulier pour les raisons d'échauffement précitées.

Il est également connu d'utiliser dans un projecteur de véhicule automobile une lampe à décharge, réputée pour son rendement lumineux. Mais une telle lampe à décharge, émettant un rayonnement très intense à partir d'une région très localisée, n'est cependant pas à même de résoudre les problèmes précités.

On connaît également par FR-A-2 046 558 un feu de signalisation routière à décharge gazeuse conforme au préambule de la revendication 1. Toutefois, les enseignements de ce feu connu ne permettent pas d'obtenir une plage éclairante homogène telle qu'exigée notamment par les règlements en matière de signalisation des véhicules, les différents secteurs de la cavité de décharge sinueuse sont séparés par des zones sombres où aucune lumière n'est engendrée.

Ensuite, pour réaliser un bloc de feux multifonctions, il faudrait multiplier les éléments de ce feu connu pour aboutir à une structure extrêment lourde et complexe.

La présente invention se propose de pallier les inconvénients de l'état de la technique.

Selon un premier aspect, elle propose un feu de signalisation tel que défini dans la revendication 1.

L'invention propose également, selon un deuxième aspect, un bloc de feux de signalisation de véhicule automobile tel que défini dans la revendication 8.

Des aspects préférés du feu et du bloc de feux sont définis dans les sous-revendications.

D'autres aspects, buts et avantages de la présente invention apparaîtront mieux à la lecture de la description détaillée suivante d'un mode de réalisation préféré de celle-ci, donnée à titre d'exemple et faite en référence aux dessins annexés, sur lesquels:
la figure 1 est une vue schématique en perspective des contours généraux d'un bloc de feux de signalisation selon l'invention,
la figure 2 est une vue en coupe transversale verticale du bloc de feux de la figure 1, et
la figures 3a à 3e sont des vues en coupe transversale horizontale à différentes échelles du bloc de feux des figures 1 et 2.

En référence aux dessins, on a représenté un bloc de feux de signalisation dans lequel chaque feu est constitué essentiellement par au moins une enveloppe délimitant une cavité fermée. Dans la cavité sont disposées au moins deux électrodes, reliées à une source de haute tension appropriée, et un gaz ou un mélange de gaz sous faible pression est disposé dans l'enveloppe. Avantageusement, l'enveloppe constitue en même temps le support du feu ou du bloc de feux.

La décharge luminescente provoquée dans la cavité lorsque les électrodes sont alimentées se répartit de façon extrêmement homogène dans ladite cavité. On comprend qu'il est donc possible de réaliser des feux de signalisation à plage éclairante homogène.

En outre, la présente invention offre de nombreux autres avantages, et notamment un rendement lumineux amélioré, une très faible épaisseur du dispositif, et et un échauffement peu important.

De préférence, comme on va le voir plus loin, différentes cavités correspondant à différents feux peuvent être réalisés à partir de plaques d'enveloppe communes réalisées d'un seul tenant.

Le bloc de feux représenté sur les figures comporte une pluralité de plages éclairantes Z1 à Z6 affectées par exemple aux fonctions lumineuses suivantes :
plage Z1 : feu clignotant ambre
plage Z2 : feu stop rouge
plage Z3 : feu de position rouge
plage Z4 : feu antibrouillard rouge
plages Z5 et Z6 : feu de recul blanc.

L'enveloppe 100 du feu est définie pour l'essentiel par une plaque extérieure 110 et par une plaque intérieure ou plaque de fond 120, s'étendant parallèlement l'une à l'autre, à faible distance (de préférence de l'ordre de quelques millimètres) sur toute l'étendue des plages éclairantes.

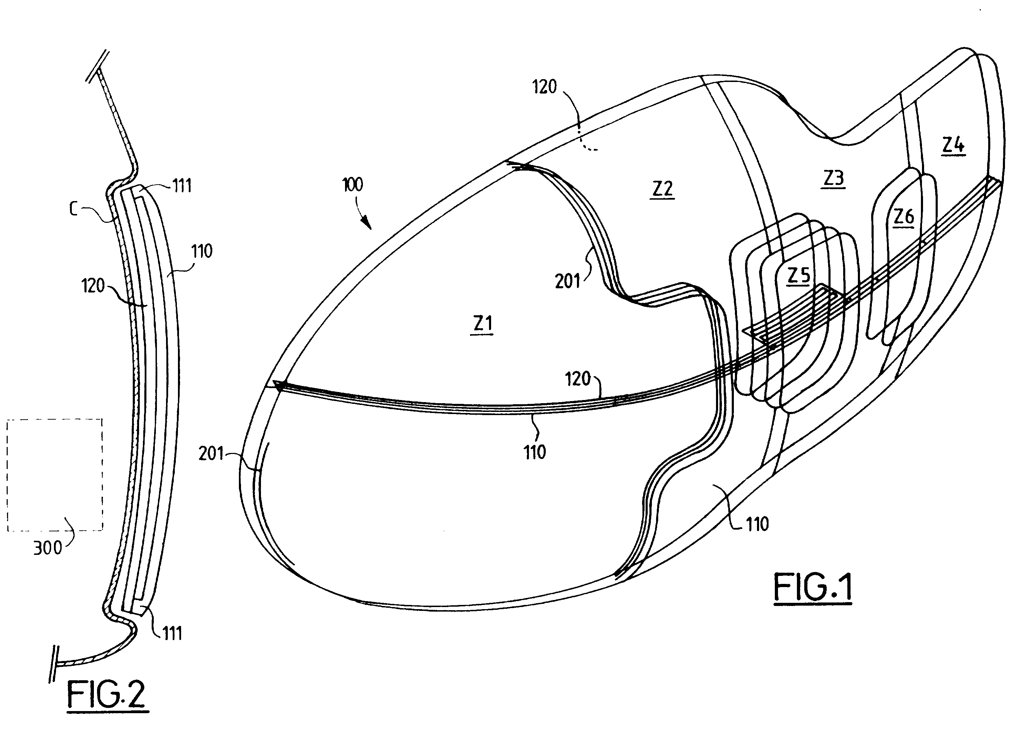

La plaque extérieure comporte sur toute sa périphérie un rebord rentrant (indiqué en 111 sur la figure 2), contre lequel est fixée de façon étanche la plaque intérieure 120.

Par ailleurs, la plaque extérieure 110 comporte en des emplacements bien déterminés des nervures rentrantes 110a, ... 110e contre lesquelles la plaque intérieure 120 est également fixée de façon étanche. La nervure 110a présente par exemple une forme sinueuse et définit la limite entre le feu clignotant et le feu stop. La nervure 110b est essentiellement droite, et délimite le feu stop d'une part par rapport au feu de position et d'autre part par rapport à la plage Z5 du feu de recul. La nervure 110c définit avec une partie de la nervure 110b la plage Z5, de forme généralement quadrangulaire, qui occupe une hauteur inférieure à la hauteur totale du feu à ce niveau. De même, les nervures 110d et 110e se rejoignent d'une part pour définir la plage éclairante Z6 et d'autre part pour séparer le feu de position du feu antibrouillard.

Ainsi la plaque 110 munie de son rebord périphérique et de ses nervures définit conjointement avec la plaque 120 une pluralité d'espaces fermés ou cavités E1 à E6 correspondant aux plages éclairantes précitées.

Chaque cavité abrite au moins deux électrodes, qui peuvent être de formes et de dimensions très diverses comme on va le voir plus loin. Ces électrodes sont désignées par les références 201 à 206 pour les cavités E1 à E6, respectivement.

Ces électrodes sont connectées, de façon classique en soi, à des ballasts 300 destinés permettant l'allumage et le maintien allumé des diverses fonctions lumineuses.

Ces ballasts peuvent être disposés en tout emplacement approprié. Dans une première réalisation, ils peuvent être montés en arrière du bloc de feux dans la carrosserie du véhicule. Dans une autre réalisation, la plaque intérieure 120 peut être conçue pour définir au moins partiellement une cavité spécifique pour lesdits ballasts. Dans ce dernier cas, le bloc de feux se présente sous la forme d'un tout monobloc.

comme on l'a indiqué, chaque feu individuel comprend à titre de source lumineuse une décharge luminescente qui se produit dans la totalité de sa cavité respective. On réalise ainsi par nature une plage éclairante homogène.

Le gaz ou le mélange de gaz sous basse pression contenu dans une cavité est choisi pour que la décharge luminescente obtenue opère, directement ou indirectement, dans le domaine de la couleur réglementaire de la fonction lumineuse considérée (typiquement rouge, ambre ou blanc).

Pour l'obtention des couleurs rouge et ambre, le gaz peut être choisi pour que la luminescence donne directement la couleur considérée.

En revanche, il est difficile d'obtenir une décharge luminescente de couleur blanche. Dans ce cas, on peut prévoir dans la cavité considérée (en l'espèce dans la cavité E6 de la fonction de recul Z6, un composé alcalino-terreux fluorescent réagissant à la décharge lumineuse provoquée avec un gaz tel que l'argon pour émettre un rayonnement de couleur blanche, selon la technique bien connue des tubes fluorescents.

Une autre solution pour obtenir la couleur blanche peut consister, comme illustré pour la zone Z5, à utiliser trois cavités superposées, dont les gaz respectifs sont choisis pour qu'elles émettent respectivement dans le domaine des trois couleurs fondamentales, rouge, vert et bleu. Par synthèse additive, la plage éclairante Z5 émet de cette manière une couleur blanche.

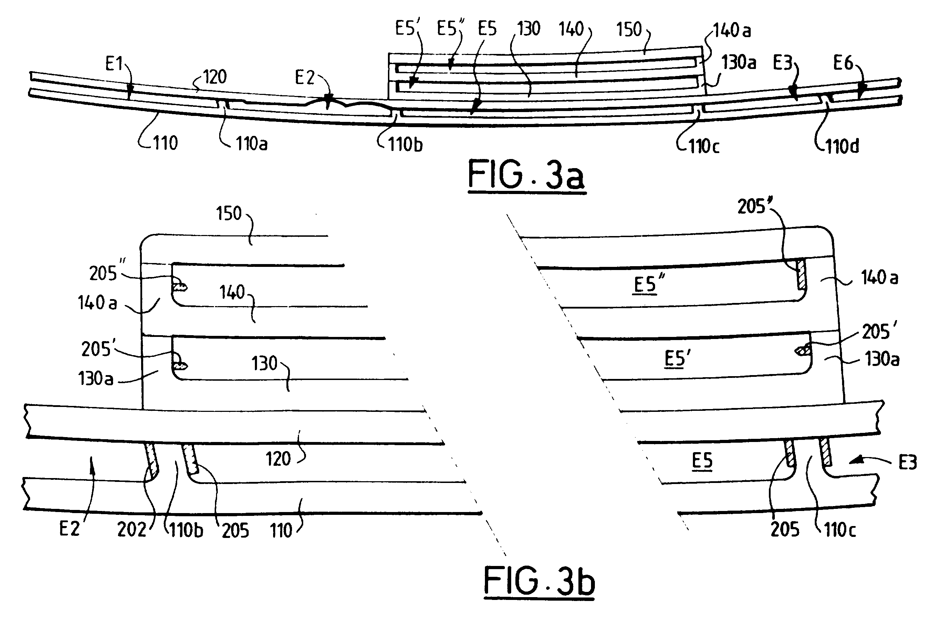

En référence à la figure 3b, on peut observer que l'une des cavités E5 est définie entre les plaques principales 110 et 120 et les nervures 110b, 110c. Les deux autres cavités E5' et E5'' sont définies par des plaques auxiliaires 130, 140 et 150 rapportées du côté intérieur de l'enveloppe principale 110, 120. Plus précisément, une plaque 130 de la taille de la zone Z5 présente un rebord périphérique rentrant 130a contre lequel est fixée la plaque 140, de mêmes dimensions, pour définir la cavité E5'. La plaque 140 comporte également un rebord périphérique rentrant 140a contre lequel est fixée la plaque terminale 150, pour définir la cavité E5". Des électrodes 205', 205" sont disposées dans ces cavités.

Bien que la figure 1 illustre à titre d'exemple, dans un même feu, deux zones Z5 et Z6 émettant dans le blanc par deux techniques différentes, il est bien évident que l'on prévoiera avantageusement, dans le cas où plusieurs plages doivent émettre dans le blanc, la même solution technique pour ces plages.

Un avantage de la solution à synthèse additive telle que décrite plus haut réside en ce que les intensités lumineuses des trois décharges luminescentes se cumulent, pour obtenir une fonction lumineuse particulièrement intense telle qu'exigée par les règlements.

Par ailleurs, ce concept de cavités superposées peut également être mis en oeuvre lorsqu'une fonction lumineuse donnée (par exemple feu stop) doit présenter une intensité lumineuse importante. Par exemple, on pourrait superposer à la cavité E2 définissant la plage éclairante rouge du feu stop une cavité supplémentaire conçue pour émettre également dans le rouge, pour ainsi doubler la quantité de lumière produite.

En variante, deux cavités superposées dans le sens de l'épaisseur de l'enveloppe peuvent contenir des gaz donnant lieu à des décharges luminescentes de deux couleurs différentes; en provoquant une décharge lumineuse dans une seule cavité à la fois, on peut ainsi obtenir dans la même plage deux fonctions de signalisation différentes.

Bien entendu, la plaque extérieure 110 est réalisée en un matériau transparent. ou le cas échéant translucide coloré, pour laisser passer le rayonnement vers l'extérieur. La plaque intérieure 120 peut quant à elle être également transparente ou translucide, mais on peut aussi lui donner toute couleur souhaitée, par exemple par coloration dans la masse, vernissage, peinture ou autre. Ainsi, lorsqu'une fonction lumineuse n'est pas activée, le gaz sous basse pression étant incolore, c'est donc la couleur de la plaque de fond 120 qui est visible. Cette coloration de la plaque de fond devient par contre imperceptible lorsque la fonction lumineuse est mise en service.

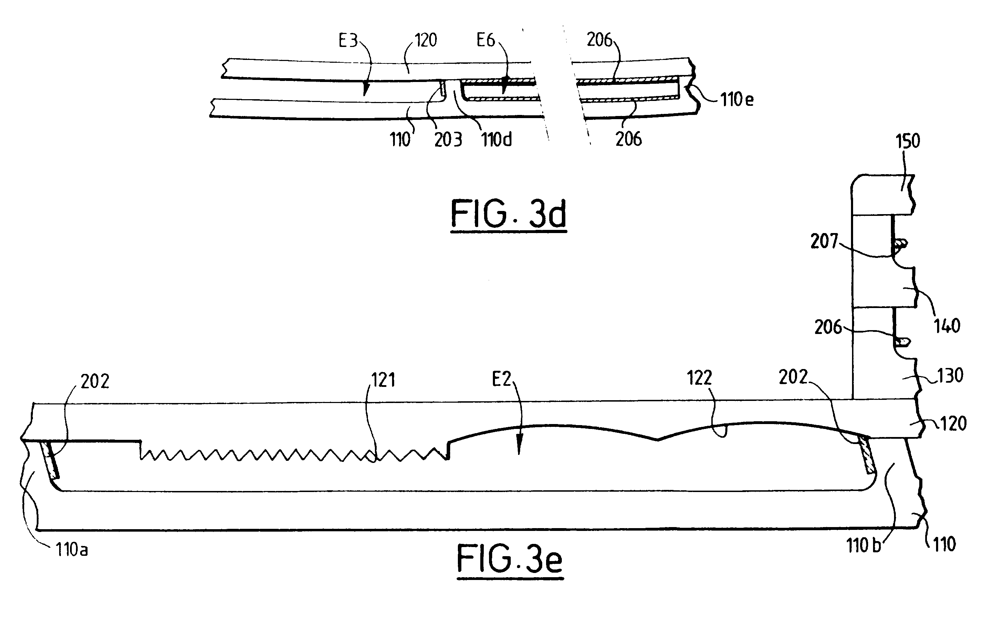

Par ailleurs, il est possible de concevoir la surface interne de la plaque de fond 120 pour qu'elle présente un rôle optique particulier. Ainsi on a représenté sur la figure 3e, au niveau de la cavité E2 correspondant au feu stop, des trièdres catadioptriques 121, réalisés d'un seul tenant avec ladite plaque. De cette manière, on confère au bloc de feux éteint la fonction catadioptrique requise par les règlements. Pour assurer la rétroréflexion catadioptrique, ces éléments 121 sont de préférence pourvus d'un revêtement réfléchissant tel que métallisation sous vide. Lorsque la plaque extérieure 110 au niveau des éléments 121 est incolore, on peut donner également à ce revêtement réfléchissant la couleur requise, généralement rouge ou ambre.

Par ailleurs, des éléments catadioptriques peuvent en variante être prévus sur la face interne de la plaque extérieure 110.

On peut également prévoir sur la face interne de la plaque 120 des réflecteurs optiques tels que 122, destinés, en renvoyant la lumière issue de la décharge luminescente vers l'extérieur par la plaque 110, à améliorer le rendement lumineux de la fonction considérée. Les réflecteurs concaves 122 tels qu'illustrés peuvent également contribuer à renforcer le faisceau de signalisation correspondant suivant l'axe pricipal d'émission, généralement parallèle à l'axe longitudinal du véhicule.

Les plaques 110 et 120, et le cas échéant les plaques auxiliaires 130, 140 et 150, peuvent être réalisées en verre, par exemple par moulage, pressage ou encore soufflage. Elles peuvent également, de façon préférée, être réalisées en matière thermoplastique, par exemple par injection basse ou haute pression, par extrusion ou par extrusion-soufflage.

On peut notamment utiliser le polyméthacrylate de méthyle, le polycarbonate, le polystyrène, ou des mélanges de ces matières plastiques.

On peut également utiliser des matières plastiques modifiées ou greffées, telles que celles utilisées dans le conditionnement alimentaire, ces matières étant réputées pour leur excellente étanchéité aux gaz.

Bien entendu, en particulier pour les zones de l'enveloppe qui n'ont pas à laisser passer la lumière visible, on peut également utiliser des matières plastiques thermodurcissables.

L'enveloppe du bloc de feu peut être réalisée soit en une seule pièce, soit comme illustré en deux plaques principales ou plus généralement deux demi-coquilles fixées l'une à l'autre de façon étanche.

Cette fixation peut s'effectuer par l'une des techniques conventionnelles suivantes : soudure par miroir chauffant, soudure par vibrations ou ultrasons, ou collage. Bien entendu, l'assemblage doit être parfaitement étanche à la dépression.

Les aménagements optiques 121, 122 décrits plus hauts sont de préférence venus de matière lors de la réalisation de la plaque 120.

Les électrodes situées dans les cavités respectives sont de préférence des cathodes froides, bien que des cathodes chaudes puissent également convenir, en effectuant les adaptations nécessaires à leurs particularités de fonctionnement. Les cathodes froides sont réalisées avantageusement en cuivre, fer ou argent ou des alliages à base de ces métaux.

De nouveau en référence aux figures, plusieurs formes, dimensions et positions d'électrodes peuvent être envisagées.

Dans le cas des cavités E1, E2, E3 et E5-E5", les électrodes correspondantes 201, 202, 203 et 205-205" présentent la forme de bandes dont la largeur est sensiblement égale à l'épaisseur des cavités en question et qui sont rapportés verticalement sur les deux bors latéraux opposés des cavités, à savoir sur les faces latérales en vis-à-vis des nervures correspondantes. En variante, on peut bien entendu les disposer horizontalement sur les bords supérieur et inférieur respectifs desdites cavités.

A titre d'exemple non limitatif, avec des cavités d'une épaisseur de l'ordre de 2 mm, on peut donner aux électrodes la forme de bandes d'une largeur d'environ 2 mm, d'une épaisseur de 0,2 à 0,4 mm et d'une longueur de 50 à 100 mm, cette longueur étant choisie notamment en fonction de la taille de la cavité associée et de la longueur de ses bords opposés.

Par ailleurs, dans le cas d'une cavité à contour sinueux, telle que la cavité E1, l'une des électrodes 201 peut épouser la forme de la nervure de séparation 110a, en s'étendant tout le long de celle-ci, tandis que l'électrode opposée occupe une partie substantielle de la hauteur du bloc de feu le long de la périphérie de la plaque 110.

Par ailleurs, on peut prévoir une paire d'électrodes dont chacune est en forme de bande, ou bien dont une seule est en forme de bande et dont l'autre est en forme de pointe. Cette solution est illustrée sur la figure 3b (électrodes opposées 205"). Dans ce cas, on bénéficie de l'effet de pointe qui facilite l'amorçage de la décharge gazeuse.

Selon une autre variante, illustrée en regard de la cavité E5', chaque électrode est constituée par une ou plusieurs pointes 205'.

Les plaques munies de leurs diverses électrodes peuvent être réalisées par surmoulage sur les électrodes métalliques préalablement mises en place et maintenues dans le moule.

En variante, les électrodes peuvent être rapportées sur les plaques après fabrication de ces dernières, ou encore réalisées par dépôt sélectif de matière. Dans ce dernier cas, les dépôts seront convenablement localisés au moyen de masques, et réalisés sous faible pression de métal ou d'alliage, notamment par évaporation sous vide, sublimation ou pulvérisation cathodique. On peut également faire appel aux techniques classiques d'évaporation réactive ou pulvérisation réactive.

Une autre solution peut consister à réaliser les électrodes sur les surfaces internes en vis-à-vis des plaques 110 et 120. Plus précisément, et en référence à la figure 3d, les deux électrodes 206 situées dans la cavité E6 sont réalisées sur toute l'étendue des plaques 110, 120 correspondant à la plage Z6. L'électrode située sur la plaque 120 (électrode de fond) peut être opaque ou transparente. En revanche, l'électrode réalisée sur la plaque extérieure 110 est transparente, afin de pouvoir laisser passer le rayonnement de signalisation. Cette électrode est de préférence réalisée par pulvérisation réactive d'indium et d'étain avec un gaz contenant de l'oxygène, pour réaliser un dépôt transparent et conducteur d'oxyde d'indium et d'étain (ITO), de façon classique en soi.

Par ailleurs, pour la ou les cavités qui doivent émettre dans le blanc par fluorescence, la substance fluorescente est de préférence déposée par l'une des techniques classiques de dépôt physique en phase vapeur telles que mentionnées ci-dessus.

De façon particulièrement préférée, si l'on réalise l'ensemble des plaques 110, 120 et le cas échéant 130, 140, 150 en une matière plastique transparente, si les faces de ces plaques sont essentiellement lisses, et si avantageusement les électrodes sont réalisées en matière conductrice transparente (couches d'oxyde d'indium et d'étain précitées), alors on obtient un bloc de feux qui laisse transparaître la partie de carrosserie C (figure 2) située en arrière dudit bloc. L'arrière du véhicule présente de cette manière une couleur essentiellement homogène et uniforme sur toute sa largeur lorsque les fonctions lumineuses ne sont pas en service.

En particulier, on peut réaliser avec les concepts de la présente invention un bloc de feux de signalisation arrière, un feu de marquage latéral, un répétiteur latéral de feu clignotant, un feu de gabarit ou de balisage pour véhicule industriel, une source d'éclairage pour l'habitacle du véhicule, un feu stop surélevé, etc...

Dans ce dernier cas, on donne préférentiellement à l'enveloppe étanche une forme adaptée à l'éventuelle inclinaison de la lunette arrière du véhicule, pour que sa fenêtre de sortie de lumière s'étende de préférence parallèlement au plan de la lunette arrière et à proximité de celle-ci.

## Revendications

1. Feu de signalisation du type comprenant :
- un voyant et un fond disposés en arrière du voyant,
- une enveloppe mince (100) étanche aux gaz, qui comporte une paroi extérieure (110) constituant ledit voyant et une paroi intérieure (120) constituant ledit fond, qui définissent ensemble une cavité fermée (E1-E6),
- un gaz sous basse pression contenu dans la cavité,
- au moins deux électrodes (201-206) situées dans la cavité, et
- des moyens (300) pour sélectivement appliquer entre les électrodes une tension d'amorçage et de maintien d'une décharge gazeuse luminescente dans la cavité,
caractérisé en ce qu'il s'agit d'un feu de signalisation automobile, en ce que ladite cavité est une cavité de faible épaisseur occupant une partie continue et étendue en deux dimensions de l'enveloppe, et en ce qu'au moins l'une (201) des électrodes présente la forme d'une bande allongée située le long de l'un des bords de la cavité.

2. Feu selon la revendication 1, caractérisé en ce que deux électrodes (201, 202, 205) prévues dans la cavité sont situées le long de deux bords opposés de ladite cavité et dans des plans essentiellement perpendiculaires à un plan général de l'enveloppe mince (100).

3. Feu selon la revendication 1, caractérisé en ce que deux électrodes prévues dans une cavité comprennent une première électrode en forme de bande (205") s'étendant le long d'un bord de la cavité et une électrode en forme de pointe (205") disposée dans une région opposée de la cavité.

4. Feu selon la revendication 1, caractérisé en ce qu'au moins une électrode s'étend sur une face interne d'une paroi (110) de l'enveloppe, sensiblement sur toute l'étendue de la cavité associée (E6).

5. Feu selon l'une des revendications 1 à 4, caractérisé en ce qu'au moins une électrode (206) est réalisée en un oxyde métallique conducteur transparent.

6. Feu selon l'une des revendications 1 à 4, caractérisé en ce que les électrodes sont réalisées par dépôt physique de métal en phase vapeur.

7. Feu selon l'une des revendications 1 à 4, caractérisé en ce que l'enveloppe munie de ses électrodes est réalisée par surmoulage de matière plastique sur lesdites électrodes.

8. Bloc de feux de signalisation multifonctions pour véhicule automobile, caractérisé en ce qu'il comprend au moins deux feux de signalisation selon l'une des revendications 1 à 7, et en ce qu'il comprend : une enveloppe mince unique (100) dont la paroi extérieure (110) et la paroi intérieure (120) définissent ensemble les cavités fermées (E1-E6) des différents feux.

9. Bloc de feux de signalisation selon la revendication 8, caractérisé en ce que les parois extérieure et intérieure sont constituées respectivement par une plaque extérieure (110) et une plaque intérieure (120) fixées ensemble de façon étanche et s'étendant à distance essentiellement constante l'une par rapport à l'autre.

10. Bloc de feux de signalisation selon la revendication 8, caractérisé en ce que les deux plaques (110, 120) sont transparentes.

11. Bloc de feux de signalisation selon l'une des revendications 9 et 10, caractérisé en ce qu'au moins l'une des plaques (110) comporte au moins une nervure (110a-110e) s'étendant en direction de l'autre plaque et fixée à cette dernière, pour isoler l'une de l'autre deux cavités adjacentes.

12. Bloc de feux de signalisation selon la revendication 11, caractérisé en ce que chaque cavité (E1-E6) définit l'ensemble d'une plage éclairante (Z1-Z6) du bloc de feux.

13. Bloc de feux de signalisation selon la revendication 12, caractérisé en ce qu'au moins deux cavités contiennent des gaz sous basse pression aptes à engendrer des décharges gazeuses dans des domaines de longueurs d'onde différentes.

14. Bloc de feux de signalisation selon l'une des revendications 8 à 13, caractérisé en ce qu'au moins une cavité comporte en outre sur la face interne de l'une des parois un revêtement fluorescent capable de convertir une décharge gazeuse luminescente dans le domaine non visible en une lumière visible.

15. Bloc de feux de signalisation selon l'une des revendications 8 à 13, caractérisé en ce que l'enveloppe mince (100) définit au moins deux cavités (E5-E5") essentiellement superposées dans le sens de l'épaisseur de ladite enveloppe, cette dernière comprenant entre lesdites cavités superposées une paroi de séparation transparente (130, 140).

16. Bloc de feux de signalisation selon la revendication 15, caractérisé en ce que deux cavités superposées dans le sens de l'épaisseur de l'enveloppe contiennent des gaz donnant lieu à des décharges luminescentes de deux couleurs différentes, et en ce qu'une décharge luminescente est provoquée dans une seule cavité à la fois, de manière à obtenir dans la même plage deux fonctions de signalisation différentes.

17. Bloc de feux de signalisation selon la revendication 15, caractérisé en ce que les deux cavités essentiellement superposées contiennent des gaz donnant lieu à des décharges luminescentes de la même couleur, pour obtenir par décharge luminescente simultanée dans les deux cavités un renforcement de l'intensité lumineuse de la plage éclairante.

18. Bloc de feux de signalisation selon la revendication 15, caractérisé en ce qu'il est prévu dans au moins une zone (Z5) trois cavités superposées, (E5-E5") abritant chacune un gaz sous basse pression de manière à émettre simultanément selon trois couleurs fondamentales, les rayonnement issus des trois cavités s'additionnant au niveau d'une fenêtre de sortie située au droit desdites cavités pour obtenir un rayonnement de couleur blanche.

19. Bloc de feux de signalisation selon l'une des revendications 8 à 18, caractérisé en ce que ladite enveloppe comporte également des aménagements optiques (121, 122).

20. Bloc de feux de signalisation selon la revendication 19, caractérisé en ce que lesdits aménagements optiques comprennent des trièdres (121) de rétroréflexion catadioptrique.

21. Bloc de feux de signalisation selon la revendication 19 ou 20, caractérisé en ce que lesdits aménagements optiques comprennent des moyens réfléchissants (122) de déviation de flux.

22. Bloc de feux de signalisation selon l'une des revendications 19 à 21, caractérisé en ce que lesdits aménagements optiques sont venus de matière sur la face interne de l'une des parois (120).

## Patentansprüche

1. Signalleuchte, umfassend:
- eine Abdeckscheibe und einen Boden, der hinter der Abdeckscheibe angeordnet ist,
- eine gasdichte, dünne Umhüllung (100), die eine Außenwand (110), die die besagte Abdeckscheibe bildet, und eine Innenwand (120), die den besagten Boden bildet, umfaßt, die zusammen einen geschlossenen Hohlraum (E1-E6) definieren,
- ein unter niedrigem Druck stehendes Gas, das im Hohlraum enthalten ist,
- mindestens zwei Elektroden (201-206), die im Hohlraum angeordnet sind, und
- Mittel (200), um zwischen den Elektroden wahlweise eine Zünd- und Haltespannung für eine Glimmentladung im Hohlraum anzulegen,
**dadurch gekennzeichnet,** daß es sich um eine Kraftfahrzeug-Signalleuchte handelt, daß der besagte Hohlraum ein Hohlraum mit geringer Dicke ist, der einen durchgehenden und in zwei Dimensionen ausgedehnten Teil der Umhüllung einnimmt, und daß mindestens eine (201) der Elektroden die Form eines länglichen Streifens aufweist, der entlang einer der Kanten des Hohlraums angeordnet ist.

2. Leuchte nach Anspruch 1 , **dadurch gekennzeichnet,** daß zwei im Hohlraum vorgesehene Elektroden (201, 202, 205) an zwei gegenüberliegenden Kanten des besagten Hohlraums entlang und in Ebenen angeordnet sind, die im wesentlichen senkrecht zu einer allgemeinen Ebene der dünnen Umhüllung (100) verlaufen.

3. Leuchte nach Anspruch 1 , **dadurch gekennzeichnet,** daß zwei in einem Hohlraum vorgesehene Elektroden eine erste Elektrode (205") in Form eines Streifens, die sich entlang einer Kante des Hohlraums erstreckt, und eine Elektrode in Form einer Spitze (205") umfassen, die in einem gegenüberliegenden Bereich des Hohlraums angeordnet ist.

4. Leuchte nach Anspruch 1 , **dadurch gekennzeichnet,** daß sich mindestens eine Elektrode auf einer Innenfläche einer Wand (110) der Umhüllung in etwa auf der gesamten Ausdehnung des zugehörigen Hohlraums (E6) erstreckt.

5. Leuchte nach einem der Ansprüche 1 bis 4 , **dadurch gekennzeichnet**, daß mindestens eine Elektrode (206) aus einem transparenten leitenden Metalloxid ausgeführt ist.

6. Leuchte nach einem der Ansprüche 1 bis 4 , **dadurch gekennzeichnet,** daß die Elektroden durch physikalische Metallabscheidung aus der Gasphase ausgeführt sind.

7. Leuchte nach einem der Ansprüche 1 bis 4 , **dadurch gekennzeichnet,** daß die mit ihren Elektroden versehene Umhüllung durch Aufformen von Kunststoff auf den besagten Elektroden ausgeführt ist.

8. Mehrfunktions-Signalleuchteneinheit für Kraftfahrzeuge , **dadurch gekennzeichnet,** daß sie mindestens zwei Signalleuchten nach einem der Ansprüche 1 bis 7 enthält und daß sie folgendes umfaßt:
eine einzige dünne Umhüllung (100), deren Außenwand (110) und Innenwand (120) zusammen die geschlossenen Hohlräume (E1-E6) der verschiedenen Leuchten definieren.

9. Signalleuchteneinheit nach Anspruch 8 , **dadurch gekennzeichnet,** daß die Außen- und Innenwände aus einer Außenplatte (110) bzw. einer Innenplatte (120) bestehen, die dicht zusammen befestigt sind und sich in einem im wesentlichen konstanten Abstand zueinander erstrecken.

10. Signalleuchteneinheit nach Anspruch 8 , **dadurch gekennzeichnet,** daß die beiden Platten (110, 120) transparent sind.

11. Signalleuchteneinheit nach einem der Ansprüche 9 und 10, **dadurch gekennzeichnet,** daß mindestens eine der Platten (110) mindestens eine Rippe (110a-110e) umfaßt, die sich in Richtung der anderen Platte erstreckt und an dieser befestigt ist, um die beiden benachbarten Hohlräume voneinander zu isolieren.

12. Signalleuchteneinheit nach Anspruch 11 , **dadurch gekennzeichnet,** daß jeder Hohlraum (E1-E6) die Gesamtheit eines Leuchtfelds (Z1-Z6) der Leuchteneinheit definiert.

13. Signalleuchteneinheit nach Anspruch 12 , **dadurch gekennzeichnet,** daß mindestens zwei Hohlräume unter niedrigem Druck stehende Gase enthalten, die Gasentladungen in Bereichen mit unterschiedlichen Wellenlängen erzeugen können.

14. Signalleuchteneinheit nach einem der Ansprüche 8 bis 13 , **dadurch gekennzeichnet,** daß mindestens ein Hohlraum außerdem auf der Innenfläche einer seiner Wände eine fluoreszierende Beschichtung umfaßt, die eine Glimmentladung im nicht sichtbaren Bereich in ein sichtbares Licht umwandeln kann.

15. Signalleuchteneinheit nach einem der Ansprüche 8 bis 13 , **dadurch gekennzeichnet,** daß die dünne Umhüllung (100) mindestens zwei Hohlräume (E5-E5") definiert, die im wesentlichen in Richtung der Dicke der besagten Umhüllung übereinander angeordnet sind, wobei letztere zwischen den beiden übereinander angeordneten Hohlräumen eine transparente Trennwand (130, 140) umfaßt.

16. Signalleuchteneinheit nach Anspruch 15 , **dadurch gekennzeichnet,** daß die beiden in Richtung der Dicke der Umhüllung übereinander angeordneten Hohlräume Gase enthalten, die zu Glimmentladungen mit zwei verschiedenen Farben führen, und daß eine Glimmentladung in nur einem Hohlraum auf einmal bewirkt wird, um in dem gleichen Leuchtfeld zwei verschiedene Signallichtfunktionen zu erhalten.

17. Signalleuchteneinheit nach Anspruch 15 , **dadurch gekennzeichnet,** daß die beiden im wesentlichen übereinander angeordneten Hohlräume Gase enthalten, die zu Glimmentladungen mit der gleichen Farbe führen, um durch die gleichzeitige Glimmentladung in den beiden Hohlräumen eine Steigerung der Lichtstärke des Leuchtfelds zu erhalten.

18. Signalleuchteneinheit nach Anspruch 15 , **dadurch gekennzeichnet**, daß in mindestens einer Zone (Z5) drei übereinander angeordnete Hohlräume (E5-E5") vorgesehen sind, die jeweils ein unter niedrigem Druck stehendes Gas enthalten, um gleichzeitig drei Grundfarben abzustrahlen, wobei sich die aus den drei Hohlräumen kommenden Strahlungen an einem in Höhe der besagten Hohlräume angeordneten Austrittsfenster additiv vermischen, um eine Strahlung in weißer Farbe zu erhalten.

19. Signalleuchteneinheit nach einem der Ansprüche 8 bis 18 , **dadurch gekennzeichnet,** daß die besagte Umhüllung außerdem optische Anordnungen (121, 122) umfaßt.

20. Signalleuchteneinheit nach Anspruch 19 , **dadurch gekennzeichnet,** daß die besagten optischen Anordnungen Trieder (121) mit katadioptrischer Retroreflexion umfassen.

21. Signalleuchteneinheit nach einem der Ansprüche 19 oder 20, **dadurch gekennzeichnet,** daß die besagten optischen Anordnungen reflektierende Mittel (122) mit Lichtstromablenkung umfassen.

22. Signalleuchteneinheit nach einem der Ansprüche 19 bis 21 , **dadurch gekennzeichnet,** daß die besagten optischen Anordnungen einstückig an der Innenfläche einer der Wände (120) ausgeführt sind.

## Claims

1. A signal light of the type comprising:
- a visual indicator and a back cover disposed behind the visual indicator,
- a gas-tight thin casing (100), which comprises an outer wall (110) forming the said visual indicator and an inner wall (120) forming the said back cover, which together define a closed cavity (E1-E6),
- a low-pressure gas contained in the cavity,
- at least two electrodes (201-206) situated in the cavity, and
- means (300) for selectively applying between the electrodes a voltage for starting and sustaining a luminous discharge in the cavity,
characterized in that it constitutes a motor vehicle signal light,
**in that** the said cavity is a cavity of small thickness occupying a two-dimensional continuous, extensive portion of the casing,
**and in that** at least the one (201) of the electrodes has the form of an elongated strip situated along one of the edges of the cavity.

2. A light according to Claim 1,
**characterised in that** two electrodes (201, 202, 205) provided in the cavity are situated along two opposite edges of the said cavity and in planes essentially perpendicular to a general plane of the thin casing (100).

3. A light according to Claim 1,
**characterised in that** two electrodes provided in a cavity comprise a first strip-shaped electrode (205") extending along one edge of the cavity and a pointed electrode (205") disposed in an opposite region of the cavity.

4. A light according to Claim 1,
**characterised in that** at least one electrode extends over an internal face of a wall (110) of the casing, substantially over the entire area of the associated cavity (E6).

5. A light according to one of Claims 1 to 4,
**characterised in that** at least one electrode (206) is produced from a transparent conductive metallic oxide.

6. A light according to one of Claims 1 to 4,
**characterised in that** the electrodes are produced by the physical deposition of metal in the vapour phase.

7. A light according to one of Claims 1 to 4,
**characterised in that** the casing equipped with its electrodes is produced by moulding plastics material onto the said electrodes.

8. A multi-function signal light assembly for a motor vehicle,
**characterised in that** it comprises at least two signal lights according to one of Claims 1 to 7,
and in that it comprises:
a single thin casing (100), the outer wall (110) and the inner wall (120) of which together define the closed cavities (E1-E6) of the different lights.

9. A signal light assembly according to Claim 8,
**characterised in that** the outer and inner walls are formed respectively by an outer plate (110) and an inner plate (120) attached tightly to one another and extending at an essentially constant distance in relation to one another.

10. A signal light assembly according to Claim 8,
**characterised in that** the two plates (110, 120) are transparent.

11. A signal light assembly according to one of Claims 9 and 10,
**characterised in that** at least the one of the plates (110) comprises at least one rib (110a-110e) extending towards the other plate and fixed to the latter, to isolate the one of the two adjacent cavities from the other.

12. A signal light assembly according to Claim 11,
**characterised in that** each cavity (E1-E6) defines the entirety of a lighting area (Z1-Z6) of the light assembly.

13. A signal light assembly according to Claim 12,
**characterised in that** at least two cavities contain low-pressure gases capable of producing gaseous discharges in fields of different wave lengths.

14. A signal light assembly according to one of Claims 8 to 13,
**characterised in that** at least one cavity also comprises on the internal face of the one of the walls a fluorescent coating capable of converting a luminous gaseous discharge in the non-visible range into a visible light.

15. A signal light assembly according to one of Claims 8 to 13,
**characterised in that** the thin casing (100) defines at least two cavities (E5-E5") essentially superimposed in the direction of the thickness of the said casing, this latter comprising between the said superimposed cavities a transparent separating wall (130, 140).

16. A signal light assembly according to Claim 15,
**characterised in that** two cavities superimposed in the direction of the thickness of the casing contain gases giving rise to luminous discharges of two different colours,
and in that a luminous discharge is produced in a single cavity at the same time, so as to obtain in the same area two different signalling functions.

17. A signal light assembly according to Claim 15,
**characterised in that** the two essentially superimposed cavities contain gases giving rise to luminous discharges of the same colour, to obtain by simultaneous luminous discharge in the two cavities an intensification of the luminous intensity of the lighting area.

18. A signal light assembly according to Claim 15,
**characterised in that** provided in at least one zone (Z5) are three superimposed cavities (E5-E5"), each housing a low-pressure gas so as to emit simultaneously three primary colours, the radiation coming from the three cavities being added at the level of an outlet window situated to the right of the said cavities to obtain a white radiation.

19. A signal light assembly according to one of Claims 8 to 18,
**characterised in that** the said casing also comprises optical fittings (121, 122).

20. A signal light assembly according to Claim 19,
**characterised in that** the said optical fittings comprise catadioptric retroreflection trihedrons (121).

21. A signal light assembly according to Claim 19 or 20,
**characterised in that** the said optical fittings comprise flux deflection reflecting means (122).

22. A signal light assembly according to one of Claims 19 to 21,
**characterised in that** the said optical fittings are made integral on the internal face of one of the walls (120).
